# EUROPEAN PATENT SPECIFICATION

(11) **EP 4 467 830 B1**
(45) Date of publication and mention of the grant of the patent: **08.04.2026**
(21) Application number: 23174816.1
(22) Date of filing: 23.05.2023
(51) Int. Cl.: F16C 19/52, F03D 80/70, F16C 23/08, F16C 33/66

(54) **BEARING ARRANGEMENT FOR A WIND TURBINE AND WIND TURBINE**
LAGERANORDNUNG FÜR EINE WINDENERGIEANLAGE UND WINDENERGIEANLAGE
AGENCEMENT DE PALIER POUR UNE ÉOLIENNE ET ÉOLIENNE

(43) Date of publication of application: 27.11.2024
(73) Proprietor: Nordex Energy SE & Co. KG, 22419 Hamburg (DE)
(72) Inventor: Harich, Martin, 22419 Hamburg (DE)
(74) Representative: Epping - Hermann - Fischer

(56) References cited:
- EP-A1- 1 710 432
- EP-A1- 4 166 802
- EP-A2- 2 657 556
- US-A1- 2010 322 543
- US-A1- 2022 042 592

## Description

The disclosure relates to a bearing arrangement for a wind turbine, in particular to a rotor bearing arrangement. The disclosure further relates to a wind turbine, in particular to a wind turbine which comprises a bearing arrangement as described herein.

A wind turbine may include a rotor that includes a rotatable rotor assembly having multiple rotor blades. The rotor blades transform wind energy into a drive torque that drives the generator via a drive train.

US 2022/042592 A1 relates to system that includes a bearing, a lubricant line, a vessel and a sensor. The lubricant line is designed to introduce lubricant from a bearing gap of the bearing into the vessel. The vessel includes an outlet or overflow. The system includes a lubricant sump and a device for introducing lubricant from the sump into the bearing gap of the bearing.

EP 2 657 556 A2 relates to a grease supply system that includes a discharge portion that forcibly discharges a grease from a rolling bearing.

EP 4 166 802 A1 relates to a fluid container for collecting lubricant of a bearing of a wind turbine. The fluid container comprises a body having a fluid outlet for draining lubricant stored in the first chamber and draining means.

US 2010/322543 A1 relates to a bearing arrangement with an outer ring and an inner ring that can rotate relative to one another, and rolling bodies, especially balls, which are located between the outer ring and the inner ring. An infeed distributor and a suction exhaust device are incorporated in such a bearing arrangement.

It is desirable to provide a bearing arrangement which provides a reliable operation. It is further desirable to provide a wind turbine which provides a reliable operation.

The invention relates to a bearing arrangement according to claim 1 and to wind turbine according to claim 14.

Embodiments of the disclosure provide a bearing arrangement for a wind turbine. The bearing arrangement comprises a bearing. The bearing arrangement comprises a bearing housing. The bearing housing houses an interior space in which the bearing is arranged. The bearing housing comprises an opening configured to drain lubricant from the interior space. The bearing arrangement comprises a chamber. The chamber comprises a fluidic connection with the opening. A damping space is formed inside the chamber. In particular, the damping space is arranged inside the chamber. In particular, the damping space is defined by the chamber. The damping space is arranged inside the chamber to throttle a lubricant flow out of the interior space.

For example, the bearing arrangement is a rotor bearing arrangement of a wind turbine. In one embodiment, the rotor bearing arrangement comprising the chamber to throttle a lubricant flow out of the interior space may correspond to both the rotor side bearing and the gearbox side bearing. The bearing arrangement and in particular the bearing is, for example, lubricated with grease or another lubricant, like an oil. It is important to contain a desired amount of lubricant inside the bearing housing in the interior space. Insufficient amount of lubricant in the bearing leads to higher wear and premature failure. On the other hand, high splashing losses lead to temperature raise and therefore reduced base viscosity which leads to lower film thickness, and eventually, to premature failure. Thus, it is important to ensure sufficient lubrication and to avoid lubricant starvation and to keep splashing losses low. An uncontrolled lubricant leakage should be avoided, in particular a leakage through a sealing of the bearing arrangement. Therefore, the opening is provided to allow a controlled draining of the lubricant.

The chamber with the damping space of the disclosure acts like a choke or a throttle to dampen the outflow of the lubricant. During operation, thelubricant, as it flows through the chamber, loses its momentum and/or energy. The lubricant settles down and forms a kind of a barrier for lubricant coming out of the interior space. The lubricant, in particular, is not flowing like a Newtoninan fluid, but rather like a structural viscous or even plastic fluid. This means, for example, that the lubricant is able to stay in a certain form and position without flowing away until a sufficient impulse or momentum occurs that triggers the movement. Thus, the chamber allows an outflow of lubricant in a controlled manner, wherein an undesirably high outflow of lubricant can be avoided. The amount of lubricant inside the bearing can be reliably kept within given thresholds. The choice of shape and dimensions of the chamber may depend on the capacity of the bearing housing, such that the impulses generated in the lubricant by the rotating bearing may be minimized to desired extents based on operational characteristics.

According to an embodiment, the chamber is arranged at least partly outside of the bearing housing. Alternatively or in addition, the chamber is arranged at least partly inside the bearing housing. It is possible to arrange the chamber at a free space of the bearing housing depending on the design of the bearing housing and the bearing arrangement. Thus, available space can be used efficiently.

According to an embodiment, the chamber comprises an inlet opening and an outlet opening. The inlet opening is connectable to the opening. Lubricant which flows out of the interior space can be reliably transferred to the chamber via the inlet opening. Lubricant which exits the chamber can be reliably guided to a collection container via the outlet opening.

According to an embodiment, a cross-section of the inlet opening of the chamber is different from a cross-section of the damping space. It is possible that the cross-section of the inlet opening is smaller than the cross-section of the damping space. Alternatively, the cross-section of the inlet opening is larger than the cross-section of the damping space. According to an embodiment, the chamber comprises a first tube. The first tube is connectable to one of the inlet opening and the outlet opening. The other of the inlet opening and the outlet opening is in fluid communication with the damping space. The first tube comprises a cross-section that is different from the cross-section of the damping space. Thus, the chamber can be designed like a siphon.

According to embodiments, the bearing arrangement comprises a hose. The hose is fluidically connectable between the chamber and the opening. This allows freedom for the arrangement of the chamber relative to the opening and the bearing housing.

According to embodiments, the bearing arrangement comprises an outlet hose. The outlet hose is fluidically connectable to the chamber at a first end. The outlet hose comprises a second end for releasing the lubricant into the collection container. This allows an arrangement of the outlet opening at a distance from the collection container.

According to an embodiment, at least one aperture is defined in the bearing housing. The opening is in fluid communication with the chamber through the at least one aperture. For example, the aperture is a hole in the bearing housing.

According to an embodiment, the chamber comprises a vent. The chamber can be vented in a controlled manner by the use of the vent.

According to an embodiment, the bearing arrangement comprises a thermal control module for regulating a chamber temperature. For example, the thermal control module comprises an insulation for insulating the chamber such that the interior of the chamber can be kept warmer than the outside. Alternatively or in addition, the thermal control module comprises a heater for heating the chamber. Alternatively or in addition, the thermal control module comprises a cooler for cooling the chamber. Thus, the thermal control module allows control of the temperature of the chamber depending on external environmental conditions in order to maintain at least one of a desired density, viscosity and other properties of the lubricant.

According to embodiments, the bearing arrangement comprises a damper. The damper is arranged inside the chamber. For example, the damper comprises at least one of a baffle, an orifice plate, a mesh, a gap, a deflector plate, and a guide vane. A desired damping effect and throttle of the lubricant flow can be realized with the damper. The damper, for example, is selected dependent on environmental conditions at the installation side of the wind turbine and/or the type of lubricant used.

According to embodiments, the damper comprises a plurality of dampers which are arranged inside the chamber. The dampers can be of the same type or of different types. The dampers can have different shapes or the same shape. The dampers can be arranged in parallel, in series and/or inclined relative to one another. The dampers can be arranged in a staggered, eclipsed and/or inclined manner.

According to embodiments, the damper comprises a spring that is biased towards the opening. The spring provides a resisting force acting against the lubricant flow out of the interior space. Thus, the pressure and momentum of the lubricant can be controlled by the spring. It is possible to have a spring with an adjustable preload such that the bias of the spring is controllable and adjustable during operation. Alternatively or in addition, the damper comprises a baffle or a plurality of baffles that can be moved to control a resisting force against the lubricant flow. For example, the baffle is connected to the spring and pivotable around a pin joint. If the flow and/or the pressure is high, for example, the baffles are moved such that a gap for the lubricant flow is smaller or even closed to stop the lubricant flow. Thus, control of the lubricant flow is possible by adjusting the degree of deflection of the buffer.

Further embodiments of the disclosure provide a wind turbine, wherein the wind turbine comprises a nacelle. The wind turbine comprises a bearing arrangement according to one of the described embodiments. The bearing arrangement is arranged within the nacelle.

The present invention will be further described with reference to the accompanying drawings. In the drawings, elements of the same structure and/or functionality may be referred to by the same reference signs. It is to be understood that embodiments showing the figures are illustrative representations and are not necessarily drawn to scale.

Figure 1 is a schematic view of a wind turbine according to an embodiment.

Figures 2 to 14 are schematic views of rotor bearing arrangements and details thereof according to different embodiments.

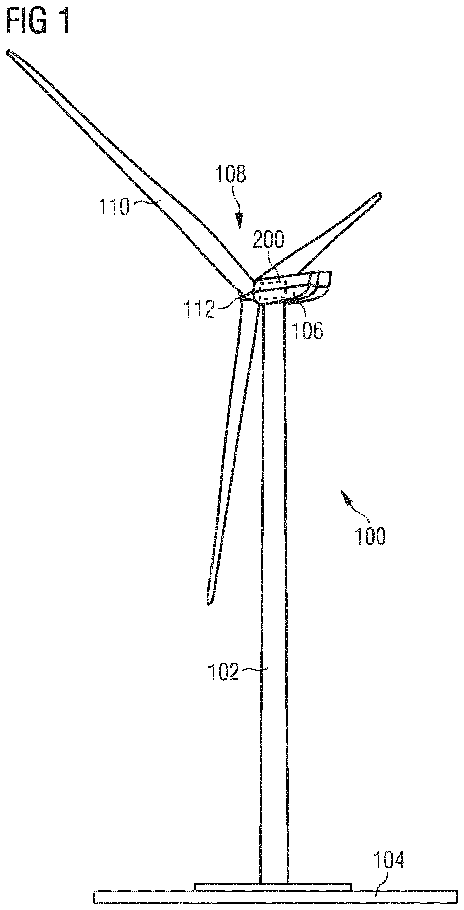

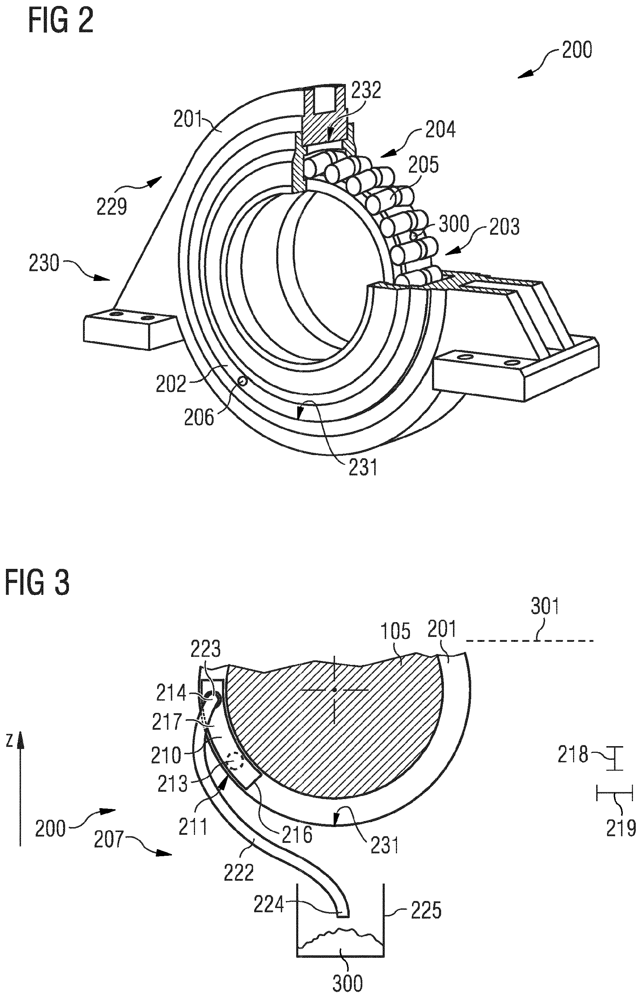

While the invention is amenable to various modifications and alternative forms, specifics thereof have been shown by way of examples in the drawings and will be described in detail. It should be understood, however, that the intention is not to limit the invention to the particular embodiments described. On the contrary, the intention is to cover all modifications falling within the scope of the invention defining by the appended claims. As shown in Figure 1, a wind turbine 100 comprises a tower 102. The tower 102 is connected to a foundation 104 fixed on a ground. The foundation 104 is formed in and supported by the ground. A nacelle 106 is arranged on a top end of the tower 102 opposite to the foundation 104. The nacelle 106 houses the drive train, among other components and subassemblies. Inside the nacelle 106, for example, a generator is arranged which is connected via the drive train to a rotor 108. The drive train comprises, for example, a gearbox and a rotor shaft 105 (Figure 3). The rotor 108 comprises several rotor blades 110. The rotor blades 110 are mounted on a rotor hub 112. The rotor hub 112 is connected to the rotor shaft 105.

The rotor 108 is driven in operation by an airflow, for example wind. The rotational movement of the rotor 108 is transmitted via the drive train to the generator. The generator converts the mechanical output of the rotor 108 into electrical energy.

The wind turbine 100 comprises a bearing arrangement 200. According to the shown embodiments the bearing arrangement 200 is a rotor bearing arrangement. The rotor shaft 105 is rotatably supported by the bearing arrangement 200. In one embodiment, the rotor bearing arrangement 200 may correspond to both the rotor side bearing arrangement and the gearbox side bearing arrangement, supporting the shaft at the rotor side and the gearbox side, respectively.

Figure 2 shows a bearing arrangement 200 according to an embodiment. The bearing arrangement 200 comprises a bearing housing 201. The bearing housing 201 houses an interior space 203. A bearing 204 is located in the interior space 203. The interior space 203 may receive a lubricant, including, but not limited to grease and/or a lubricating oil from a lubricant source.

The bearing 204 comprises an inner ring, an outer ring and rolling elements 205 which enable the relative rotation between the inner ring and the outer ring. The inner ring may be connected to the shaft 105 and the outer ring may be connected to the bearing housing 201.

The interior space 203 is sealed by a bearing cover 202 on the front side and/or on the rear side of the bearing housing 201 during operation, wherein the front side corresponds, for example, to a side facing or proximal to the gearbox (not explicitly shown and the rear side corresponds, for example, to the side opposite to or distant from the gearbox. According to a further example, the front side corresponds to a side facing or proximal to the rotor 108 and the rear side corresponds, for example, to the side opposite to or distant from the rotor 108.

The bearing housing 201, and in particular the bearing cover 202, comprises an opening 206. The opening 206, which may be a drain hole defined in the bearing housing, provides a passage through the bearing housing 201. The opening 206, in particular, may be arranged in a lower half of the bearing housing 201 which is next to a bottom 231 of the interior space 203. In one embodiment, the opening 206 may serve as a passageway between the bearing interior space 203 and the bearing exterior.

The lubricant 300 is provided in the interior space 203 for lubricating the bearing 204 and in particular the rolling elements 205. The lubricant 300 in particular comprises grease.

The lubricant 300 is provided in the interior space 203 with a desired lubricant level 301 (Figure 3). In particular, the desired lubricant level 301 reaches an upper hemispherical part 229 of the bearing housing 201, which is arranged between the center and the top 232.

Old or dirty lubricant 300 can be drained via the opening 206 out of the interior space 203. Alternatively or in addition, if too much lubricant 300 is present in the interior space 203, this lubricant 300 can be released through the opening 206 in a controlled manner. With the opening 206, which can also be referred to as "drain hole 206", uncontrolled outflow of the lubricant 300 out of the interior space 203 is avoidable according to embodiments of the disclosure. Further, it can be ensured that a sufficient amount of lubricant 300 is maintained inside the interior space 203 by a chamber 210 which provides a damping effect, thereby throttling the lubricant flow, which will be explained in more detail below. The chamber 210 can also be referred to as sedation chamber 210.

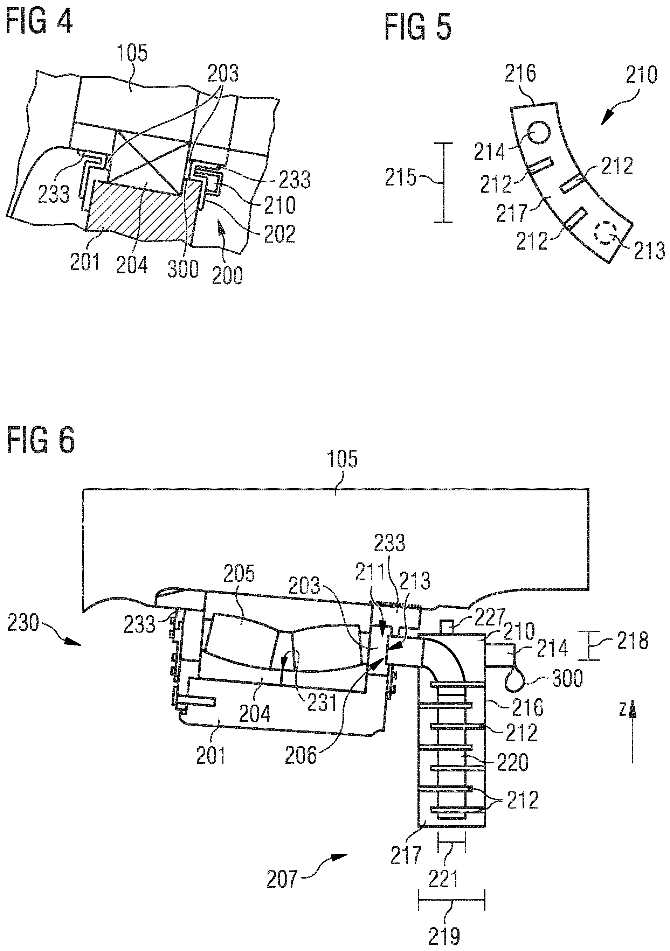

Figure 3 shows a first example of the chamber 210 which comprises an inlet opening 213 and an outlet opening 214. The inlet opening 213 may be fluidically connected to the opening 206. Thus, the lubricant 300 reaches a damping space 217 (Figure 5) of the chamber 210 via the opening 206 and the inlet opening 213 of the chamber 210. The chamber 210 comprises a fluidic connection 211 with the opening 206 such that the opening 206 is in fluidic communication with the damping space 217. This provides a fluidic communication between the interior space 203 and the damping space 217.

For example, an outlet hose 222 is connected to the outlet opening 214 of the chamber 210. A first end 223 of the outlet hose 222 is connected with the outlet opening 214. An opposite second end 224 of the outlet hose 222 is in fluidic communication with a collection container 225. The collection container 225 is provided for collecting lubricant 300 which gets drained out of the interior space 203 via the chamber 210 and the outlet hose 222.

The chamber 210 comprises a chamber housing 216 which surrounds the damping space 217. The chamber housing 216 defines the damping space 217. In an embodiment, the chamber housing 216 demarcates the shape of the damping space 217 inside the chamber 210. Further, in the exemplary embodiment shown in FIG. 3, the outlet opening 214 may be located above the inlet opening 213 in a vertical direction. This allows the lubricant entering the chamber 210 via the inlet opening 213 settle inside the chamber 210, thereby losing its momentum and/or energy, resulting in damping. When lubricant fills to a predetermined level inside the chamber 210, it flows out of the outlet opening 214 into the outlet hose 222.

According to the example of Figure 3, a cross-section 219 of the damping space 217 is larger than a cross-section 218 of the inlet opening 213. According to further examples, the cross-section of the inlet opening 218 is larger than the damping space 219.

The opening 206 may be located at a lower hemispherical part 230 of the bearing housing 201, which is arranged between the center and the bottom 231.

During operation, the lubricant 300 exits the interior space 203 and enters the damping space 217 via the opening 206 and the inlet opening 213. The opening 206 and the inlet opening 213 may serve as a nozzle and/or a throttle. The lubricant 300 loses its momentum while it flows from the interior space 203 into the damping space 217. The lubricant 300 settles inside the damping space 217. In an embodiment, the lubricant 300 may lose its momentum and/or energy as it flows through or settles inside the damping space 217. The lubricant 300 so collected/settling inside the damping space 217 acts as a barrier for additional lubricant 300 which tries to exit the interior space 203. If the lubricant 300 reaches the height of the outlet opening 214, which is arranged above the inlet opening 213, the lubricant 300 exits through the outlet hose 222. Because the lubricant 300 has a low viscosity like a plastic fluid, it stays in the damping space 217 if there is no additional impulse or momentum. In other words, the lubricant settled inside the damping space 217 which does not have sufficient momentum and/or energy exhibits resistance to flow out through the outlet hose 222, unless there is additional impulse or momentum. This way, throttling the flow of the lubricant out of the interior space 203 may be attained. In an embodiment, the lubricant 300 does not flow back into the interior space 203.

By entering the comparatively large damping space 217 with the cross-section 219 through the comparably small openings 206, 213 with the cross-section 218, the impulses provided by the moving bearing 204 are significantly choked. Thus, an outflow of lubricant 300 caused by these impulses is damped.

With the chamber 210, the free space in the interior space 203 can be reduced because a higher impulse created by the closed wall next to the moving bearing 204 can be compensated by the chamber 210. The reduced free space allows a reduction of the amount of lubricant 300 for the initial filling, which enables cost savings. The reduced free space also leads to more movement of the lubricant 300 during operation. Thus, the lubricant 300 is mixed better and stays more agile. Back-feeding is improved and the overall lubrication regime is improved. This reduces the risk of failure and leads to a higher lifetime of the bearing arrangement 200 and reduces service costs.

The size of the chamber 200, in particular of the cross-section 218 of the inlet opening 213 and the cross-section 219 of the damping space 217 can be easily adapted, depending on different climates or different types of lubricant 300. Refitting or changes during operation, for example due to field experience, can also be easily carried out. The chamber 300 is easily accessible in those examples in which the chamber 210 is arranged at an outside 207 of the bearing housing 201. This allows, for example, lubricant samples to be taken in a more controlled and reproducible way by taking them out of a defined area of the chamber 210 where particles, especially larger ones, will settle down in the damping space 217. These particles, for example, can be collected by a magnet or otherwise out of the chamber 210.

Figure 4 shows a cross-section of a detail of the bearing arrangement 200. The chamber 210 is arranged on a side of the bearing housing 201 which faces the gearbox (not explicitly shown), for example. A sealing 233 is arranged to seal the interior space 203 such that the lubricant 300 stays in the interior space 203. The chamber 210 is arranged outside of the sealing 233. In particular, the sealing 233 may be a touch seal which is in direct contact with the shaft 105. The sealing 233 can have a shape that reduces the free space between the rolling element 205 and the sealing 233 because the chamber 210 damps pressure fluctuations.

Figure 5 shows the chamber 210 according to an embodiment. Dampers 212 are arranged inside the chamber housing 216 to throttle the lubricant flow through the damping space 217 from the inlet opening 213 to the outlet opening 214. Figure 5 shows three dampers 212. The number of dampers 212 can be different, for example there is just one single damper 212 provided, two dampers 212 or more than three dampers 212. The number of dampers 212 is dependent on a desired damping effect.

The damper 212, for example, is a baffle. Alternatively, or in addition, the damper 212 is an orifice plate. Alternatively or in addition, the damper 212 is a mesh. Alternatively or in addition, the damper 212 is a gap. Alternatively, or in addition, the damper 212 is a deflector plate. Alternatively, or in addition, the damper 212 is a guide vane. Alternatively, or in addition, the damper 212 may be supported by a spring. Other forms, designs or types of dampers 212 are possible, which are configured and arranged for damping the lubricant flow through the damping space 217.

All dampers 212 inside the chamber 210 can be of the same type or different types of dampers 212 can be arranged inside the chamber 210. For example, the damper 212 is aligned transverse to the flow directions of the lubricant. The dampers can have different shapes or the same shape. For instance, the dampers may be plate like having straight edges, or vane like having curved geometry. Further, the dampers can be arranged in parallel, in series and/or inclined relative to one another. Furthermore, the dampers can be arranged in a staggered, eclipsed and/or inclined manner relative to one another.

In an embodiment, the damping space 217 may be defined by the flow path formed between successive dampers. The lubricant flowing through said flow path lose momentum and/or energy leading to damping of pulsations in the lubricant.

The inlet opening 213 and the outlet opening 214 are arranged spaced apart from one another at a distance 215. In particular, the outlet opening 214 is arranged above the inlet opening 213.

Figure 6 shows a further example of the bearing arrangement 200. The chamber 210 comprises a first tube 220 which comprises the inlet opening 213 adjoining the opening 206. The first tube 220 comprises a cross-section 221 which is smaller than the cross-section 219 of the damping space 217. The first tube 220 is arranged inside the chamber housing 216. During operation, lubricant 300 enters the damping space 217 via the first tube 220. The first tube 220 and the chamber 210 are arranged like a siphon. The outlet opening 214 is arranged at the chamber housing 216. Dampers 212 are arranged in the damping space 217 between the first tube 220 and the chamber housing 216.

A vent 227 is provided at a top of the chamber 210, in particular at a top of the chamber housing 216. According to further examples, there is no specific vent 227 provided. The vent 227 is provided for evacuating and removing air which, for example, comes out of the interior space 203 into the chamber 210. Air which is transported out of the interior space 203 can be collected and separated inside the chamber housing 216 and eventually evacuated by the vent 227. Thus, too much lubricant outflow due to trapped air can be avoided.

A main longitudinal extension direction of the chamber housing 216 and the first tube 220 runs along a vertical direction Z. The inlet opening 213 and the outlet opening 214 are arranged along a horizontal direction. The inlet opening 213 and the outlet opening 214 are arranged opposite to each other along the horizontal direction. In an embodiment, the outlet opening 214 may be at a different height than the inlet opening 213, for example, slightly above or below the location of the inlet opening 213. In another embodiment, damping of pulsations in the lubricant may be effectuated by flow of lubricant through the first tube 220 and/or rise of lubricant in the damping space 217 across the dampers 212.

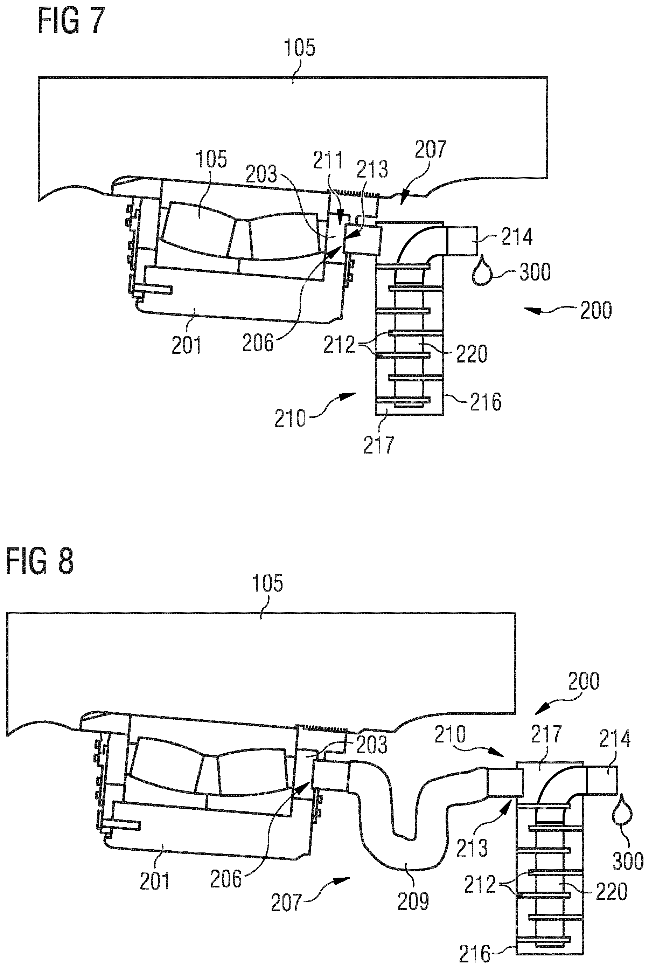

Figure 7 shows a further example of the bearing arrangement 200. The inlet opening 213 is arranged at the chamber housing 216 to adjoin the chamber 210 at one end and to adjoin the opening 206 at the opposite end. The first tube 220 housed in the chamber 210 comprises the outlet opening 214. During operation, lubricant 300 enters the damping space 217 via the inlet opening 213 and rises inside the first tube 220 while it also rises inside the chamber 210 passing through the dampers 212. The lubricant 300 exits the chamber housing 216 through the first tube 220 from the outlet opening 214 after passing the dampers 212.

In a further embodiment shown in Figure 8, a hose 209 may be provided between the opening 206 and the inlet opening 213. This is possible in the shown example, according to which the inlet opening 213 is formed in the chamber housing 216. The hose 209 can also be provided in the other described examples, for example as shown in Figures 3 and 6.

In particular, the hose 209 is a flexible hose which is connected between the damping space 217 and the opening 206. The hose 209 allows an arrangement of the chamber housing 216 spaced apart from the opening 206 of the bearing housing 201.

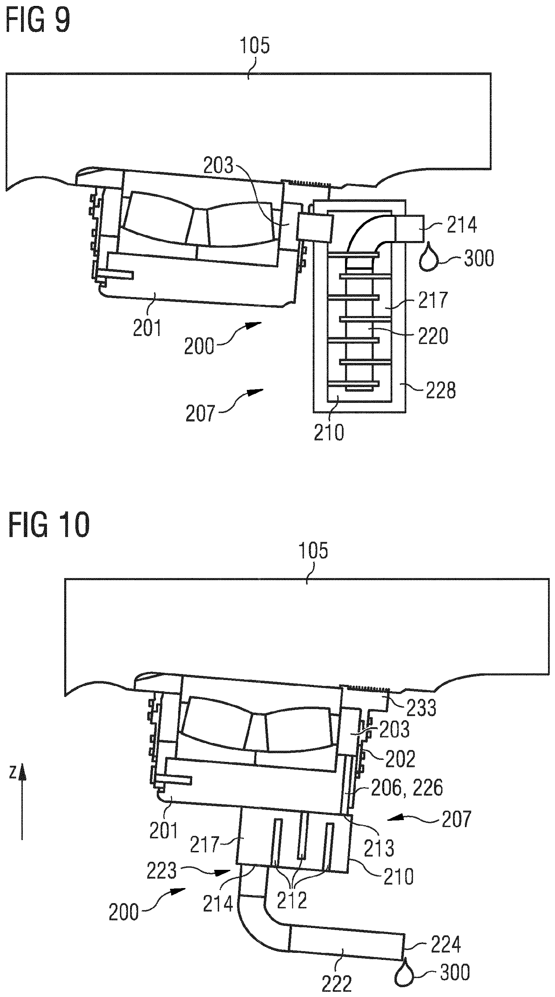

As shown in Figure 9, the bearing arrangement 200 may comprise a thermal control module 228. According to embodiments, the thermal control module 228 comprises a passive thermal insulation. Alternatively or in addition, the thermal control module 228 comprises an electrical heating and/or cooling. The thermal control module 228 is arranged for controlling the temperature inside the chamber housing 216, in particular the temperature of the lubricant 300 in the damping space 217. By controlling the temperature, a desired viscosity and/or other properties of the lubricant 300 can be realized. The thermal control module 228 can be provided at the different examples of the bearing arrangement 200 as, for example, shown in the other figures.

As shown in Figure 10, the longitudinal main extension of the chamber 210 may be arranged more horizontal than vertical.

The chamber housing 216, for example, is connected to the bearing housing 201 at a bottom side of the bearing housing 201.

The bearing housing 201 comprises one or more apertures 206, 226 which are arranged along the vertical direction Z to connect the interior space 203 with the damping space 217. The inlet opening 213 is fluidically connected to the aperture 226.

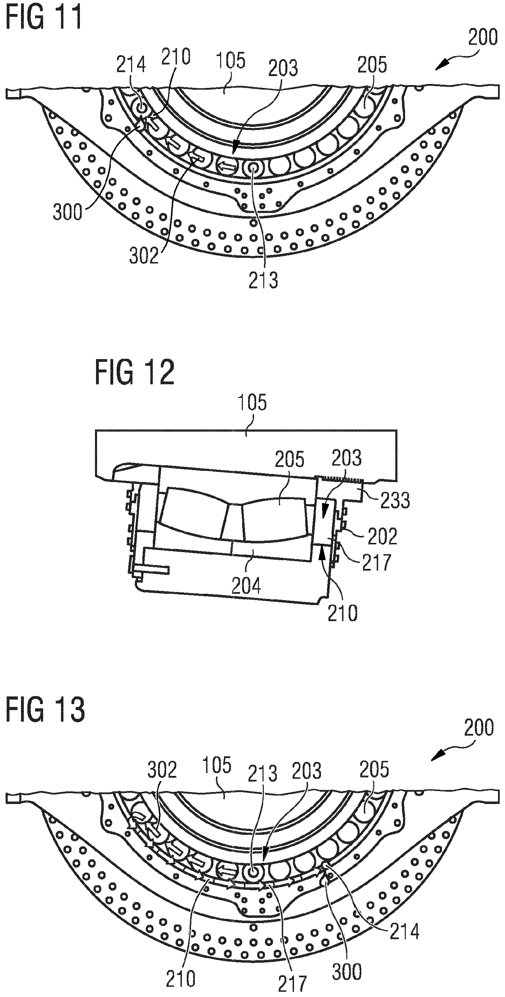

Figures 11 to 13 show examples according to which the chamber 210 is arranged inside interior space 203. For example, the chamber 210 is integrated in the bearing cover 202. Free space inside the bearing housing 201 can be used as the chamber 210. The inlet opening 213 is part of the bearing cover 202 and the lubricant 300 is guided between the inlet opening 213 and the outlet opening 214 along the bearing cover 202. It is also possible to arrange the chamber 210 in the bearing cover 202 at a side opposite to the rolling elements 205 along the horizontal direction.

As shown in Figure 13, it is also possible to increase the length of the damping space 217 inside the bearing cover 202 by providing a channel design which comprises a direction change or a plurality of direction changes. Starting at the inlet opening 213, a lubricant flow direction 302 of the lubricant 300 is first directed to the left of Figure 13 and then changes such that the lubricant flow direction 302 is directed to the right of Figure 13 before the lubricant 300 exits the damping space 217 through the outlet opening 214.

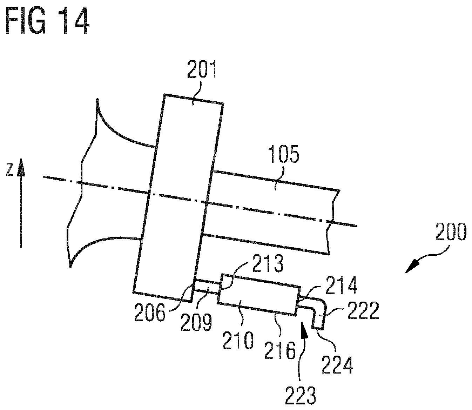

Figure 14 shows an embodiment of the bearing arrangement 200 in which the chamber 210 is arranged along an axial direction of the shaft 105. The chamber housing 216 can be arranged independent from the bearing housing 201, spaced apart from the bearing housing 201. The chamber 210 can be formed in the style of a muffler, wherein the cross-section 219 of the damping space 217 is larger than the cross-section 218 of the inlet opening 213 and, for example, of the hose 209.

The bearing arrangement 200, with the chamber 210, provides the damping space 217. This reduces the risk of failure of the bearing 204. Outflow of the lubricant 300 can be controlled and thereby the amount of lubricant 300 can be increased and the lubricant level 301 can be kept at a desired height.

### Reference Signs

100 wind turbine
102 tower
104 foundation
105 shaft
106 nacelle
108 rotor
110 rotor blade
112 rotor hub
200 bearing arrangement
201 bearing housing
202 bearing cover
203 interior space
204 bearing
205 rolling element
206 opening
207 outside
209 hose
210 chamber
211 fluidic connection
212 damper
213 inlet opening
214 outlet opening
215 distance between openings
216 chamber housing
217 damping space
218 cross-section of inlet opening
219 cross-section of damping space
220 first tube
221 cross-section of inner tube
222 outlet hose
223 first end
224 second end
225 collection container
226 aperture
227 vent
228 thermal control module
229 upper part
230 lower part
231 bottom
232 top
233 sealing
300 lubricant
301 lubricant level
302 lubricant flow direction
Z vertical direction

## Claims

1. Bearing arrangement (200) for a wind turbine (100), comprising
- a bearing (204),
- a bearing housing (201), wherein the bearing housing (201) houses an interior space (203) in which the bearing (204) is arranged, and wherein the bearing housing (201) comprises an opening (206) for draining lubricant (300) from the interior space (203),
- a chamber (210), wherein the chamber (210) comprises a fluidic connection (211) with the opening (206), wherein a damping space (217) is formed inside the chamber (210) to throttle a lubricant flow out of the interior space (203),
- a damper (212), wherein the damper (212) is arranged inside the chamber (210) **characterized in that** the damper comprises at least one of a baffle, an orifice plate, a mesh, and a deflector plate.

2. Bearing arrangement according to claim 1, wherein the chamber (210) is arranged outside (207) of the bearing housing (201) and/or inside the bearing housing (201).

3. Bearing arrangement according to claim 1 or 2, wherein the chamber (210) comprises an inlet opening (213) and an outlet opening (214), wherein the inlet opening (213) is connectable to the opening (206).

4. Bearing arrangement according to claim 3, wherein a cross-section (218) of the inlet opening (213) of the chamber (210) is different from a cross-section (219) of the damping space (217).

5. Bearing arrangement according to claim 3 or 4, wherein the chamber (210) comprises a first tube (220) connectable to one of the inlet opening (213) and the outlet opening (214), such that the damping space (217) is in fluid communication with other of the inlet opening (213) and the outlet opening (214), and wherein the first tube (220) comprises a cross-section (221) that is different from the cross-section (219) of the damping space (217).

6. Bearing arrangement according to any one of claims 1 to 5, comprising a hose (209), wherein the hose (209) is fluidically connectable between the chamber (210) and the opening (206).

7. Bearing arrangement according to any one of claims 1 to 6, comprising an outlet hose (222), wherein the outlet hose (222) is fluidically connectable to the chamber (210) at a first end (223), and comprises a second end (224) for releasing the lubricant into a collection container (225).

8. Bearing arrangement according to any one of claims 1 to 7, wherein the opening (206) is in fluid communication with the chamber (210) through at least one aperture (226) defined in the bearing housing (201).

9. Bearing arrangement according to any one of claims 1 to 8, wherein the chamber (210) comprises a vent (227).

10. Bearing arrangement according to any one of claims 1 to 9, comprising a thermal control module (228) for regulating a chamber (210) temperature.

11. Bearing arrangement according to claim 1, wherein the damper (212) comprises a spring that is biased towards the opening (206).

12. Bearing arrangement according to claim 1 or 11, wherein the damper (212) is movably arranged inside the chamber (210) for adjusting the throttle depending on the position of the damper (212).

13. Bearing arrangement according to any one of claims 1 to 12, wherein a plurality of dampers (212) is arranged inside the chamber (210), wherein the dampers are arranged in parallel, in series and/or inclined relative to one another.

14. Wind turbine, comprising
- a nacelle (106);
- a bearing arrangement (200) according to any one of claims 1 to 13 which is arranged within the nacelle (106).

## Patentansprüche

1. Lageranordnung (200) für eine Windkraftanlage (100), aufweisend
- ein Lager (204),
- ein Lagergehäuse (201), wobei das Lagergehäuse (201) einen Innenraum (203) umgibt, in dem das Lager (204) angeordnet ist, und wobei das Lagergehäuse (201) eine Öffnung (206) zum Ablassen von Schmierstoff (300) aus dem Innenraum (203) aufweist,
- eine Kammer (210), wobei die Kammer (210) eine fluidische Verbindung (211) mit der Öffnung (206) aufweist, wobei innerhalb der Kammer (210) ein Dämpfungsraum (217) ausgebildet ist, um einen Schmierstoffstrom aus dem Innenraum (203) zu dämpfen,
- einen Dämpfer (212), wobei der Dämpfer (212) innerhalb der Kammer (210) angeordnet ist, **dadurch gekennzeichnet, dass** der Dämpfer mindestens eines aufweist aus einer Prallplatte, einer Lochplatte, einem Sieb und einer Ablenkplatte.

2. Lageranordnung nach Anspruch 1, wobei die Kammer (210) außerhalb (207) des Lagergehäuses (201) und/oder innerhalb des Lagergehäuses (201) angeordnet ist.

3. Lageranordnung nach Anspruch 1 oder 2, wobei die Kammer (210) eine Einlassöffnung (213) und eine Auslassöffnung (214) aufweist, wobei die Einlassöffnung (213) mit der Öffnung (206) verbindbar ist.

4. Lageranordnung nach Anspruch 3, wobei ein Querschnitt (218) der Einlassöffnung (213) der Kammer (210) sich von einem Querschnitt (219) des Dämpfungsraums (217) unterscheidet.

5. Lageranordnung nach Anspruch 3 oder 4, wobei die Kammer (210) ein erstes Rohr (220) umfasst, das mit einer der Einlassöffnungen (213) und der Auslassöffnung (214) verbindbar ist, sodass der Dämpfungsraum (217) mit der anderen Öffnung, der Einlassöffnung (213) und der Auslassöffnung (214) in Fluidverbindung steht, und wobei das erste Rohr (220) einen Querschnitt (221) aufweist, der sich von dem Querschnitt (219) des Dämpfungsraums (217) unterscheidet.

6. Lageranordnung nach einem der Ansprüche 1 bis 5, umfassend einen Schlauch (209), wobei der Schlauch (209) fluidisch zwischen der Kammer (210) und der Öffnung (206) verbindbar ist.

7. Lageranordnung nach einem der Ansprüche 1 bis 6, umfassend einen Auslassschlauch (222), wobei der Auslassschlauch (222) an einem ersten Ende (223) fluidisch mit der Kammer (210) verbunden ist und ein zweites Ende (224) zum Abführen des Schmierstoffs in einen Auffangbehälter (225) aufweist.

8. Lageranordnung nach einem der Ansprüche 1 bis 7, wobei die Öffnung (206) über mindestens eine im Lagergehäuse (201) ausgebildete Öffnung (226) mit der Kammer (210) in Fluidverbindung steht.

9. Lageranordnung nach einem der Ansprüche 1 bis 8, wobei die Kammer (210) eine Lüftungsöffnung (227) aufweist.

10. Lageranordnung nach einem der Ansprüche 1 bis 9, umfassend ein Temperaturregelmodul (228) zur Regelung einer Temperatur der Kammer (210).

11. Lageranordnung nach Anspruch 10, wobei der Dämpfer (212) eine Feder umfasst, die zur Öffnung (206) hin vorgespannt ist.

12. Lageranordnung nach einem der Ansprüche 1 bis 11, wobei der Dämpfer (212) innerhalb der Kammer (210) beweglich angeordnet ist, um die Dämpfung in Abhängigkeit von der Position des Dämpfers (212) einzustellen.

13. Lageranordnung nach einem der Ansprüche 1 bis 12, wobei eine Vielzahl von Dämpfern (212) innerhalb der Kammer (210) angeordnet ist, wobei die Dämpfer parallel, in Reihe und/oder zueinander geneigt angeordnet sind.

14. Windenergieanlage, aufweisend
- eine Gondel (106);
- eine Lageranordnung (200) nach einem der Ansprüche 1 bis 13, die innerhalb der Gondel (106) angeordnet ist.

## Revendications

1. Agencement de palier (200) pour une éolienne (100), comprenant
- un palier (204),
- un boîtier de palier (201), le boîtier de palier (201) logeant un espace intérieur (203) dans lequel est disposé le palier (204), et le boîtier de palier (201) présentant une ouverture (206) pour évacuer du lubrifiant (300) de l'espace intérieur (203),
- une chambre (210) ayant une connexion fluidique (211) avec l'ouverture (206), un espace d'amortissement (217) étant formé à l'intérieur de la chambre (210) afin de réduire l'écoulement de lubrifiant hors de l'espace intérieur (203),
- un amortisseur (212) disposé à l'intérieur de la chambre (210), **caractérisé en ce que** l'amortisseur comprend une plaque d'impact, un diaphragme, un tamis et/ou une plaque de déviation.

2. L'agencement de palier selon la revendication 1, sachant que la chambre (210) est disposée à l'extérieur (207) du boîtier de palier (201) et/ou à l'intérieur du boîtier de palier (201).

3. L'agencement de palier selon la revendication 1 ou 2, sachant que la chambre (210) comprend une ouverture d'entrée (213) et une ouverture de sortie (214), l'ouverture d'entrée (213) pouvant être reliée à l'ouverture (206).

4. L'agencement de palier selon la revendication 3, sachant qu'une section transversale (218) de l'ouverture d'entrée (213) de la chambre (210) diffère d'une section transversale (219) de l'espace d'amortissement (217).

5. L'agencement de palier selon la revendication 3 ou 4, sachant que la chambre (210) comprend un premier tube (220) pouvant être relié à l'ouverture d'entrée (213) ou à l'ouverture de sortie (214), de sorte que l'espace d'amortissement (217) soit en communication fluidique avec l'ouverture d'entrée (213) ou l'ouverture de sortie (214), et le premier tube (220) présentant une section transversale (221) qui diffère de la section transversale (219) de l'espace d'amortissement (217).

6. L'agencement de palier selon l'une des revendications 1 à 5, comprenant un tuyau (209), le tuyau (209) pouvant être raccordé de manière fluidique entre la chambre (210) et l'ouverture (206).

7. L'agencement de palier selon l'une des revendications 1 à 6, comprenant un tuyau de sortie (222), le tuyau de sortie (222) pouvant être relié de manière fluidique à la chambre (210) à une première extrémité (223) et présentant une deuxième extrémité (224) pour évacuer le lubrifiant dans un récipient collecteur (225).

8. L'agencement de palier selon l'une des revendications 1 à 7, sachant que l'ouverture (206) est en communication fluidique avec la chambre (210) par au moins une embouchure (226) formée dans le boîtier de palier (201).

9. L'agencement de palier selon l'une des revendications 1 à 8, sachant que la chambre (210) comprend un évent (227).

10. L'agencement de palier selon l'une des revendications 1 à 9, comportant un module de régulation thermique (228) pour réguler la température de la chambre (210).

11. L'agencement de palier selon la revendication 1, sachant que l'amortisseur (212) comprend un ressort précontraint vers l'ouverture (206).

12. L'agencement de palier selon la revendication 1 ou 11, sachant que l'amortisseur (212) est disposé de manière mobile à l'intérieur de la chambre (210) afin de régler l'étranglement en fonction de la position de l'amortisseur (212).

13. L'agencement de palier selon l'une des revendications 1 à 12, sachant que plusieurs amortisseurs (212) sont disposés à l'intérieur de la chambre (210), les amortisseurs étant disposés parallèlement, en série et/ou inclinés les uns par rapport aux autres.

14. Éolienne, comprenant
- une nacelle (106) ;
- un agencement de palier (200) selon l'une des revendications 1 à 13, disposé dans la nacelle (106).
